(19) Europäisches Patentamt
European Patent Office
Office européen des brevets

(11) Veröffentlichungsnummer : **0 056 068**
**B1**

(12) # EUROPÄISCHE PATENTSCHRIFT

(45) Veröffentlichungstag der Patentschrift : **17.07.85**

(51) Int. Cl.⁴ : **C 02 F 1/52**, C 02 F 1/56

(21) Anmeldenummer : **81100240.1**

(22) Anmeldetag : **14.01.81**

(54) **Verfahren zur Behandlung von Abwässern.**

(43) Veröffentlichungstag der Anmeldung : **21.07.82 Patentblatt 82/29**

(45) Bekanntmachung des Hinweises auf die Patenterteilung : **17.07.85 Patentblatt 85/29**

(84) Benannte Vertragsstaaten : **AT BE CH FR GB IT LI LU NL SE**

(56) Entgegenhaltungen :
**AT-B- 324 967**
**DE-B- 1 642 886**
**DE-B- 1 933 035**
**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Köppelmann, Edgar, Dr.**
**Am Eichelkamp 166**
**D-4010 Hilden (DE)**
Erfinder : **Krapp, Gerd**
**Werstener Dorfstrasse 19**
**D-4000 Düsseldorf 13 (DE)**
Erfinder : **Schumann, Klaus, Dr.**
**Keplerstrasse 33**
**D-4006 Erkrath (DE)**
Erfinder : **Smolka, Heinz, Gerd, Dr.**
**Senliser Strasse 32**
**D-4018 Langenfeld (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 056 068 B1**

Jouve, 18, rue St-Denis, 75001 Paris, France

**Beschreibung**

Die Erfindung betrifft ein Verfahren zur Behandlung von Abwässern unter Verwendung von Fällungs- und Flockungsmitteln.

In einigen industriellen Produktionszweigen, wie z. B. bei der Papier- und Pappe-Herstellung oder auch in Großwäschereien werden große Mengen Wasser eingesetzt, die — mit zum Teil erheblichen Anteilen an Inhaltsstoffen belastet — als Abwasser anfallen. Unter ökologischen und wirtschaftlichen Gesichtspunkten stellt die Wiederaufbereitung derartiger Abwässer ein Problem mit ständig zunehmender Bedeutung dar. Bei der heute allgemein üblichen Abwasseraufbereitung erfolgt die Reinigung der Abwässer in einem kombinierten Fäll- und Abbauprozeß. Man fällt dabei, indem man dem Abwasser Fäll- und Flockungsmittel zusetzt, durch welche ein großer Teil der in Wasser gelösten oder dispergierten Ballaststöffe zusammen mit den Fäll- und Flockungsmitteln in eine leicht abtrennbare Form, meist in einen nichtschleimigen, flockigen Niederschlag umgewandelt werden. In der Literatur ist eine Vielzahl von Fäll- und Flockungsmitteln beschrieben. Neben organischen polymeren Verbindungen auf Basis von beispielsweise Acrylamid werden vor allem Kalk sowie hydrolysierende Eisen- und Aluminiumsalze und Silikate als Fällmittel für die Reinigung von Schmutzwässern beschrieben. So ist aus der US-amerikanischen Patentschrift 2 310 009 ein Verfahren zur Wasseraufbereitung bekannt, bei dem eine gealterte wäßrige Mischung aus einer Natriumsilikat-Lösung und einer Aluminiumsulfat-Lösung als Fällmittel verwendet wird.

In der deutschen Patentschrift 971 180 werden zur Behandlung von Abwasser saure $SiO_2$-Sole, die Eisen- oder Aluminiumsalze enthalten, beschrieben. Ein ähnliches, mit $SiO_2$-ärmeren Solen arbeitendes Verfahren ist aus der britischen Patentschrift 827 586 bekannt. Die US-amerikanische Patentschrift 3 235 444 beschreibt ein Verfahren zur Reinigung von Abwässern aus der Papierfabrikation, bei dem die Flockung durch Zugabe von Aluminiumsulfat-Lösung und aktivierten Kieselsäure zum Abwasser vorgenommen wird. Ebenfalls aktivierte Kielselsäure und Aluminiumsulfat zur Reinigung stark verschmutzter Abwässer werden in « Zellstoff und Papier », *13* (1964), Seite 331 ff beschrieben, wobei die aktivierte Kieselsäure durch Einleiten von Chlorgas in Wasserglaslösungen erzeugt wird. Diese bekannten Reinigungsverfahren können nicht voll befriedigen, weil die Wirksamkeit unzureichend ist, zudem große Fällmittelmengen benötigt werden und die anfallenden Schlämme voluminös und wasserreich sind, wodurch eine eventuell notwendige Nachbehandlung der Schlämme und ihre Deponierung erschwert werden.

Die Verwendung von amorphen Alkalialumosilikat-Dispersionen, die durch Vermischen von wäßrigen Alkalisilikat- und Aluminiumsalz-Lösungen unter starkem Scheren hergestellt werden, ist aus der DE-OS-2 229 895 als Norwich-Verfahren bekannt. Bei diesem Verfahren werden die Dispersionen von Alkalialumosilikaten unbestimmter Zusammensetzung « in situ » zur Fällung von Abwasserbestandteilen eingesetzt, so daß also bei einer Abwasseraufbereitungsanlage eine Herstellanlage für diese speziellen Dispersionen betrieben werde muß. Es liegt auf der Hand, daß durch die dabei erforderliche Abstimmung beider Anlagen aufeinander leicht Störungen auftreten können.

In der DE-AS-1 642 886 wird ein Verfahren zur Klärung von Roh- und/oder Abwässern beschrieben, bei dem organische Verbindungen zusammen mit in der Natur vorkommenden Phyllosilikaten, die mit Na-, K-, $NH_4$- oder H-Ionen aktiviert sein müssen, dem Rohwasser zugesetzt werden. Ein Hinweis darauf, daß man anstellte der aktivierten Phyllosilikate mit ausgezeichnetem Erfolg sauer eingestellte Suspensionen synthetisch hergestellter anderer Aluminosilikate definierter Zusammensetzung, die zudem nicht aktiviert zu werden brauchen, zur Abwasser-Reinigung verwenden kann, ist dieser Literaturstelle nicht zu entnehmen.

Aufgabe der vorliegenden Erfindung war daher die Bereitstellung eines vereinfachten Verfahrens zur Abwasserbehandlung durch Fällung unter Verwendung von üblichen polymeren Flockungsmitteln und gegebenenfalls üblichen Fällungsmitteln mit ausgezeichneter Wirksamkeit, das außerdem leichter handhabbare Schlämme liefert.

Diese Aufgabe wird durch das erfindungsgemäße Verfahren gelöst, das dadurch gekennzeichnet ist, daß man dem zu behandelnden Abwasser, das gegebenenfalls auf einen schwach alkalischen bis schwach sauren pH-Wert eingestellt worden ist, zusätzlich zu üblichen Flockungsmitteln und zu den gegebenenfalls vorhandenen üblichen Fällungsmitteln ca. 0,1-10 Gramm pro Liter Abwasser eines gebundenes Wasser enthaltenden, röntgenamorphen oder kristallinen, synthetisch hergestellten feinteiligen Alkali- und/oder Erdalkalialumosilikats der Formel

$$x\ Kat_{2/n}O \cdot Al_2O_3 \cdot y\ SiO_2,$$

in der x einen Wert von 0,7-1,5, y einen Wert von 0,8-6, Kat Natrium, Kalium, Magnesium oder Calcium und n die Zahl 1 oder 2 bedeuten, in Form einer wäßrigen, auf einen pH-Wert von 3,5 bis 5,0 eingestellten Suspension zusetzt und den sich bildenden Niederschlag vom Wasser abtrennt.

Geeignete feinteilige Alumosilikate weisen praktisch keine Teilchen mit Korngrößen über 50, vorzugsweise über 30 µm auf. Die Korngröße liegt im allgemeinen im Bereich von 0,1 bis 10 µm.

Übliche Fällungsmittel sind z. B. Aluminium- oder Eisensulfat und Alkalisilikate, die als Zusatz zu

Abwässern voluminöse Niederschläge bilden, an denen Abwasser-Inhaltsstoffe adsorbiert werden und bei der Abtrennung der Niederschläge aus dem Abwasser entfernt werden. Durch Zusatz von Flockungsmitteln zum Abwasser wird die Wirkung der Fällungsmittel unterstützt. Bekannte Flockungsmittel sind beispielsweise bestimmte anionische oder nichtionische hochmolekulare Acrylpolymere, wie die Handelsprodukte « Hercofloc » der Firma Hercules oder « Ferrocryl » der Firma Henkel, oder polymere basische Aluminiumsalze, beispielsweise « Sachtoklar » der Firma Sachtleben Chemie.

Die erfindungsgemäß einsetzbaren Alumosilikate lassen sich in einfacher Weise durch Reaktion von wasserlöslichen Silikaten mit wasserlöslichen Aluminaten in Gegenwart von Wasser herstellen. Es fallen amorphe Alumosilikate aus, die man als Suspension oder nach dem Abtrennen und Trocknen als Pulver für das erfindungsgemäße Verfahren verwenden kann. Die amorphen Alumosilikate kann man durch Erhitzen ihrer wäßrigen Suspensionen in den kristallinen Zustand überführen und so entweder nach dem Trocknen der abgetrennten Feststoffe als Pulver oder ohne Abtrennung als gegebenenfalls mit Säure behandelte wäßrige Suspension für das erfindungsgemäß Verfahren verwenden. Bei der Herstellung der Alumosilikate geht man im allgemeinen von den Alkaliverbindungen aus und erhält dementsprechend Alkalialumosilikate. Wegen ihrer Verfügbarkeit in großtechnischen Mengen werden vorzugsweise kristalline Alumosilikate, insbesondere die aus der Literatur bekannten Zeolithe A, P, X und Y (vgl. hierzu D.W. Breck, Zeolite Molecular Sieves, Verlag John Wiley & Sons, Inc., 1974, Seiten 48 und 49, sowie Seiten 133, 168, 176 und 177) bzw. die röntgenamorphen Verbindungen der entsprechenden Zusammensetzung vorzugsweise in Mengen von 0,1-10 Gramm pro Liter Abwasser ein. Ein Zusatz von 0,1 Gramm pro Liter Abwasser ist erforderlich, wenn nur sehr schwach verunreinigtes Wasser behandelt werden soll, während man eine Menge von 10 Gramm pro Liter für Behandlung von sehr stark verunreinigtem Wasser einsetzen wird. 0,2 bis 5,0 Gramm pro Liter sind in den meisten Fällen ausreichend. Für normal verschmutztes Wasser ist im allgemeinen ein Zusatz von 0,3-3,0 Gramm pro Liter Abwasser erforderlich. Enthält das Abwasser bereits x Gramm Alumosilikat pro Liter Abwasser, wenn es sich also um Abwasser aus Wäschereien handelt, in denen Alumosilikat enthaltende Waschmittel eingesetzt werden, setzt man dem Abwasser zur Durchführung der erfindungsgemäßen Verfahrens entsprechend weniger Alumosilikat (0,10-10 Gramm pro Liter, vermindert um x Gramm pro Liter) als Pulver oder als Suspension zu, so daß das Abwasser die oben näher erläuterten Konzentrationen an Alumosilikat aufweist.

Überraschenderweise wurde gefunden, daß man auch die Erdalkaliverbindungen der oben genannten Alumosilikate für das erfindungsgemäße Verfahren verwenden kann ; es ist allerdings nicht zweckmäßig, daß man die Alkalialumosilikate etwa durch Basenaustausch in die Erdalkalialumosilikate umwandelt, da man durch den Einsatz der Erdalkalialumosilikate gegenüber den Alkalialumosilikaten keinen Vorteil erzielt. Vielmehr liegen die Alumosilikate dann zumindest teilweise als Erdalkaliverbindungen vor, wenn man Abwässer behandelt, die Flotten von alumosilikathaltigen Waschmitteln enthalten.

Das Alumosilikat setzt man in Form einer wäßrigen Alumosilikat-Suspension, die man durch Säurezugabe auf einen pH-Wert zwischen 3,5 und 5,0 eingestellt hat, zu. Weiterhin ist es zur Erhöhung der Wirksamkeit bevorzugt, das zu behandelnde Abwasser auf einen pH-Wert zwischen ca. 5,0 und 10,0 einzustellen. Falls Wäschereiabwässer gereinigt werden sollen, ist zur pH-Wert-Einstellung der alkalireichen Abwässer ebenfalls ein Säurezusatz erforderlich. Bewährt hat sich zur pH-Wert-Einstellung sowohl der Alumosilikat-Suspension als auch der Abwässer ein Zusatz einer leicht zugänglichen starken, umweltunbedenklichen Mineralsäure, insbesondere der Schwefelsäure.

Durch die erfindungsgemäße Verfahrensweise erzielt man im Vergleich zu den bekannten Verfahren höhere Schmutz-Eliminierungsraten und/oder geringeren Fällmittelbedarf. Die ausgeschiedenen Abwasserinhaltsstoffe fallen gegenüber den herkömmlichen Verfahren mit ausschließlicher Verwendung üblicher Fällungs- und Flockungsmittel in größeren Flocken an, die schneller sedimentieren und sich leichter, beispielsweise durch Filtrieren, Dekantieren oder Zentrifugieren abtrennen lassen. Die abgetrennten Schlämme enthalten zudem weniger Wasser, was ihre Deponierung erleichtert. Die zuzusetzenden Alumosilikate sind in großen Mengen billig verfügbare Handelsprodukte ; sie lassen sich im Vergleich zu bekannten Verfahren, die mit instabilen $SiO_2$-Solen arbeiten, problemlos handhaben. Das erfindungsgemäße Verfahren ist unkritisch hinsichtlich der Einhaltung von Verfahrensparametern ; diese können in weiten Grenzen schwanken, ohne daß dadurch das Behandlungsergebnis oder die übrigen Vorteile des Verfahrens beeinflußt werden.

Man kann eine derartige Behandlung dort vornehmen, wo das Abwasser anfällt und dadurch die kommunalen Abwasseraufbereitungsanlagen erheblich entlasten. Wo es gewünscht wird, kann man wegen des großen erzielbaren Effekts bei der erfindungsgemäßen Behandlung das Abwasser soweit reinigen, daß man es erneut und sogar mehrere Male als Brauchwasser wieder einsetzen kann, so daß man lediglich Wasserverluste ausgleichen muß. Hierdurch lassen sich Prozesse mit großem Wasserverbrauch in der Wirtschaftlichkeit erheblich verbessern ; zudem führt man so den kommunalen Wasseraufbereitungsanlagen mengenmäßig erheblich weniger und zudem weniger stark verschmutztes Wasser zu.

## Beispiele

Die Arbeitsweise und Wirksamkeit des erfindungsgemäßen Verfahrens soll durch die folgenden

Beispiele erläutert werden. Das für die Versuche benutzte Abwasser stammte aus Waschprozessen ; dementsprechend enthielt es Waschmittelbestandteile (z. B. Tenside, Elektrolyte, Waschmittelphosphate und sonstige organische Gerüststoffe) und Schmutz (löslichen und unlöslichen, z. B. Pigmente, Farbstoffe, Eiweiß, Fett). Die zur Reinigung durchgeführten Fällungen wurden im Labor in Rührbehältern mit jeweils 250 ml Schmutzwasser bei ca. 30 bis 35 °C unter Rühren mit einem Propellerrührer (500 bis 700 U/min.) vorgenommen. Die ausgefällten Niederschläge wurden durch Filtrieren über Faltenfilter (Selecta Nr. 597 1/2 ; ∅ 185 mm) abgetrennt. Zur besseren Flockenbildung wurde dem Schmutzwasser in allen Beispielen neben den in den einzelnen Beispielen angegebenen Fällungsmitteln ein handelsübliches Flockungsmittel (ein hochmolekulares, stark anionisches Acrylpolymeres mit einem Molekulargewicht von $8\text{-}10 \cdot 10^6$, « Hercofloc 821 », Hercules Powder) in einer Konzentration von ca. 10 ppm zugesetzt.

Die Schmutzbelastung des eingesetzten Schmutzwassers und des gereinigten Wassers wurde durch Ermittlung des CSB-Wertes (chemischer Sauerstoffbedarf in mg $O_2$/l), z. B. beschrieben in « Vom Wasser », *46* (1976), Seite 139 ff und durch Bestimmung des Phosphat-Gehaltes nach der Molybdat-Methode angegeben.

Das bei der Durchführung des erfindungsgemäßen Verfahrens benutztes Alumosilikat war das Handelsprodukt « HAB A 40 » der Firma Degussa, mit der Zusammensetzung $1{,}03\ Na_2O \cdot 1\ Al_2O_3 \cdot 1{,}94\ SiO_2$. Die Partikelgröße dieses Produktes lag zu 100 % unter 20 µm und zu 98,6 % unter 10 µm. Der mittlere Teilchendurchmesser, bestimmt mit dem Coulter-Counter (Volumen-Verteilung) lag bei 3,8 µm. In den Beispielen 1 bis 3 bedeutet die Angabe « Alumosilikat » dieses Handelsprodukt.

Die Versuchsdaten für die folgenden Beispiele 1 bis 3 sind nachstehend in der Tabelle 1 aufgeführt.

Tabelle 1

| Beispiel | Al-sulfat (mg Al/l) | polym. Al-Chlorid (mg Al/l) Sachtoklar | Alumosilikat (g/l) | CSB-Wert (mg $O_2$/l) vor | nach | Elim. % | $P_2O_5$-Gehalt (mg/l) vor | nach | Elim. % | Trübg. | Filtrierbark. |
|---|---|---|---|---|---|---|---|---|---|---|---|
| 1 | — | 552 | — | 2 150 | 409 | 81 | 515 | 25 | 95 | + | mäßig |
| 2 | — | 504 | 2[1)] | 2 100 | 296 | 86 | 515 | 25 | 95 | – | gut |
| 3 | — | 464 | 0,5[1)] | 2 100 | 315 | 84 | 515 | 25 | 95 | – | sehr gut |

[1)] Alumosilikat mit $H_2SO_4$ auf pH 4 in wäßriger Suspension eingestellt.

Beispiele 1 bis 3

Beispiel 1 ist ein Beispiel des Standes der Technik. Die Beispiele 2 und 3 sind Beispiele für das erfindungsgemäße Verfahren und zeigen, daß bei Verwendung von Alumosilikat als Fällmittel die Menge an polymerem Aluminiumsalz bei gleicher Phosphat-Eliminierung und höheren Eliminierungsraten für oxidierbare Wasserinhaltsstoffe sogar noch verringert werden kann. In den Beispielen 2 und 3 wurde das Alumosilikat in Form einer mit Schwefelsäure auf einen pH-Wert von 4 eingestellten wäßrigen Suspension eingesetzt.

**Patentansprüche**

1. Verfahren zur Behandlung von Abwässern durch Fällung unter Verwendung von üblichen polymeren Flockungsmitteln und gegebenenfalls üblichen Fällungsmitteln, dadurch gekennzeichnet, daß man dem zu behandelnden Abwasser, das gegebenenfalls auf einen schwach alkalischen bis schwach sauren pH-Wert eingestellt worden ist, zusätzlich zu den üblichen Flockungsmitteln und zu den gegebenenfalls vorhandenen üblichen Fällungsmitteln ca. 0,1 bis 10 Gramm pro Liter Abwasser eines gebundenes Wasser enthaltenden röntgenamorphen oder kristallinen, synthetisch hergestellten, feinteiligen Alkali- und/oder Erdalkalialumosilikats der Formel

$$x\ Kat_{2/n}O \cdot Al_2O_3 \cdot y\ SiO_2$$

in der x einen Wert von 0,7 bis 1,5, y einen Wert von 0,8 bis 6, Kat Natrium, Kalium, Magnesium oder Calcium und n die Zahl 1 oder 2 bedeuten, in Form einer wäßrigen, auf einen pH-Wert von 3,5 bis 5,0 eingestellten Suspension zusetzt und den sich bildenden Niederschlag vom Wasser abtrennt.

2. Verfahren nach Anspruch 1, dadurch gekennzeichnet, daß man ein kristallines Alumosilikat verwendet.

3. Verfahren nach einem der Ansprüche 1 und 2, dadurch gekennzeichnet, daß man als Alumosilikat kristallines Alumosilikat aus der Gruppe Zeolith A, P, X und Y zusetzt.

4. Verfahren nach einem der Ansprüche 1 bis 3, dadurch gekennzeichnet, daß man das zu behandelnde Wasser auf einen pH-Wert von 5,0 bis 10,0 einstellt.

5. Verfahren nach einem der Ansprüche 1 bis 4, dadurch gekennzeichnet, daß man die pH-Wert-Einstellung mit starken Säuren, vorzugsweise Schwefelsäure vornimmt.

6. Verfahren nach einem der Ansprüche 1 bis 5, dadurch gekennzeichnet, daß man dem zu behandelnden Wasser das Alumosilikat nach der Schmutzaufnahme zusetzt.

7. Verfahren nach einem der Ansprüche 1 bis 6, dadurch gekennzeichnet, daß man dem zu behandelnden Abwasser, welches bereits x Gramm Alumosilikat pro Liter Wasser, z. B. aus Waschflotten stammend, enthält, 0,1 bis 10 Gramm, vermindert um x Gramm, Alumosilikat pro Liter Wasser zusetzt.

**Claims**

1. A method for treating waste waters by precipitation using standard polymeric flocculants and, optionally, standard precipitants, characterized in that, in addition to the standard flocculants and the standard precipitants optionally present, from about 0.1 to 10 gram per liter of waste water of an X-ray amorphous or crystalline, synthetically produced, finely particulate alkali and/or alkaline-earth alumosilicate containing bound water and corresponding to the following formula

$$x\ Cat_{2/n}O \cdot Al_2O_3 \cdot y\ SiO_2$$

in which x has a value of from 0.7 to 1.5, y has a value of from 0.8 to 6, Cat represents sodium, potassium, magnesium or calcium and n is the number 1 or 2, in the form of an aqueous suspension adjusted to a pH-value of from 3.5 to 5.0 is added to the waste water to be treated, which has optionally been adjusted to a mildly alkaline to mildly acidic pH-value, and the deposit formed is separated off from the water.

2. A process as claimed in Claim 1, characterized in that a crystalline alumosilicate is used.

3. A process as claimed in Claim 1 or 2, characterized in that the alumosilicate used is a crystalline alumosilicate from the group comprising zeolite A, P, X and Y.

4. A process as claimed in any of Claims 1 to 3, characterized in that the water to be treated is adjusted to a pH-value of from 5.0 to 10.0.

5. A process as claimed in any of Claims 1 to 4, characterized in that strong acids, preferably sulfuric acid, are used for adjusting the pH-value.

6. A process as claimed in any of Claims 1 to 5, characterized in that alumosilicate is added to the water to be treated after the uptake of dirt.

7. A process as claimed in any on Claims 1 to 6, characterized in that the from 0.1 to 10 gram, reduced by x gram, of alumosilicate per liter of water is added to the waste water to be treated which already contains x gram of alumosilicate per liter of water, for example emanating from wash liquors.

**Revendications**

1. Procédé de traitement d'eaux résiduaires par précipitation, avec utilisation d'agents floculants polymères usuels et éventuellement d'agents de précipitation usuels, caractérisé en ce qu'on ajoute à l'eau résiduaire à traiter, qui a été réglée éventuellement à une valeur de pH faiblement alcaline à faiblement acide, en plus des agents floculants usuels et des agents de précipitation usuels éventuellement présents, environ 0,1 à 10 g par litre d'eau résiduaire d'un alumosilicate alcalin et/ou alcalinoterreux finement divisé, préparé par synthèse, contenant de l'eau liée et qui est amorphe ou cristallin aux rayons X, de formule

$$x\ Kat_{2/n}O \cdot Al_2O_3 \cdot y\ SiO_2$$

dans laquelle x a une valeur de 0,7 à 1,5, y une valeur de 0,8 à 6, Kat signifie du sodium, potassium, magnésium ou calcium et n est le nombre 1 ou 2, sous forme d'une suspension aqueuse réglée à une valeur de pH de 3,5 à 5,0, et en ce qu'on sépare d'avec l'eau le précipité formé.

2. Procédé selon la revendication 1, caractérisé en ce qu'on utilise un alumosilicate cristallin.

3. Procédé selon l'une des revendications 1 et 2, caractérisé en ce qu'on utilise en tant qu'alumosilicate un alumosilicate cristallin du groupe des zéolites A, P, X et Y.

4. Procédé selon l'une des revendications 1 à 3, caractérisé en ce qu'on règle l'eau à traiter à une valeur de pH de 5,0 à 10,0.

5. Procédé selon l'une des revendications 1 à 4, caractérisé en ce qu'on entreprend le réglage de la valeur du pH avec des acides forts, de préférence avec de l'acide sulfurique.

6. Procédé selon l'une des revendications 1 à 5, caractérisé en ce qu'on ajoute à l'eau à traiter l'alumosilicate après l'absorption de la saleté.

7. Procédé selon l'une des revendications 1 à 6, caractérisé en ce qu'on ajoute à l'eau résiduaire à traiter, qui contient déjà x grammes d'alumosilicate par litre d'eau, provenant par exemple de bains de lavage, 0,1 à 10 grammes, diminués des x grammes d'alumosilicate par litre d'eau.